# EUROPÄISCHE PATENTSCHRIFT

(11) **EP 4 406 403 B1**
(45) Veröffentlichungstag und Bekanntmachung des Hinweises auf die Patenterteilung: **06.08.2025**
(21) Anmeldenummer: 24154016.0
(22) Anmeldetag: 25.01.2024
(51) Int. Cl.: A01F 25/18

(54) **VERTEILVORRICHTUNG FÜR DIE VERTEILUNG LANDWIRTSCHAFTLICHEN ERNTEGUTES**
DISTRIBUTION DEVICE FOR THE DISTRIBUTION OF AGRICULTURAL HARVESTED MATERIAL
DISPOSITIF DE RÉPARTITION POUR LA RÉPARTITION DE PRODUITS AGRICOLES

(30) Priorität: 27.01.2023 DE 102023102038
(43) Veröffentlichungstag der Anmeldung: 31.07.2024
(73) Patentinhaber: Wübker, Tobias, 49835 Wietmarschen (DE)
(72) Erfinder: Wübker, Tobias, 49835 Wietmarschen (DE)
(74) Vertreter: Wischmeyer, André

(56) Entgegenhaltungen:
- EP-B1- 0 035 435
- NL-A- 8 005 825
- PRODIG: "User Manual", 11 January 2019 (2019-01-11), pages 1 - 40, XP093171666, Retrieved from the Internet <URL:https://www.prodigattachments.com/images/Usermanul/User-Manual.pdf> [retrieved on 20240606]
- SCHMIHING LANDTECHNIK: "Schmihing Abschiebegabel am Fendt 1050", 9 November 2017 (2017-11-09), XP093171700, Retrieved from the Internet <URL:https://www.youtube.com/watch?v=OMghZBj2Yxw> [retrieved on 20240606]
- MATHEW O'REILLY: "NEW PRODUCT - Push Off Grass Fork", 1 January 2017 (2017-01-01), pages 1 - 4, XP093171662, Retrieved from the Internet <URL:https://www.prodigattachments.com/en/news/item/25-new-product-push-off-grass-fork> [retrieved on 20240606]

## Beschreibung

Die Erfindung betrifft eine Verteilvorrichtung für die Verteilung landwirtschaftlichen Erntegutes wie z. B. Gras. Die Verteilvorrichtung weist ein Schildelement mit einer zu einer Arbeitsrichtung angewinkelten Erntegutkontaktfläche auf, die zum Schieben des Erntegutes in die Arbeitsrichtung dient. Außerdem weist die Verteilvorrichtung eine Mehrzahl von Zinkenelementen auf, die vom Schildelement abstehen und sich parallel zueinander länglich in die Arbeitsrichtung erstrecken.

Eine derartige Verteilvorrichtung ist im Bereich der Landwirtschaft bekannt. Sie wird insbesondere zum Anlegen von Silage in einem Fahrsilo verwendet. Mittels der bekannten Verteilvorrichtung wird von einem Ladewagen unverdichtet im Fahrsilo abgelegtes Erntegut möglichst gleichmäßig verteilt und anschließend verdichtet. Dazu wird die Verteilvorrichtung üblicherweise als lösbar mit einem Traktor gekoppeltes Anbaugerät verwendet, der das Erntegut in die Längsrichtung des Fahrsilos überfährt. Dabei entspricht die Fahrtrichtung des Traktors der Arbeitsrichtung der Verteilvorrichtung.

Durch die bekannte Verteilvorrichtung lässt sich das unverdichtet abgelegte Erntegut mittels der Zinkenelemente zwar anheben und mittels der Erntegutkontaktfläche in die Arbeitsrichtung, die praktisch der Längsrichtung des Fahrsilos entspricht, verschieben. Eine seitliche Verlagerung des Erntegutes verlangt jedoch, dass der gesamte Traktor mit der Verteilvorrichtung innerhalb des Fahrsilos quergestellt und das unverdichtet abgelegte Erntegut in Portionen, deren in die Längsrichtung des Fahrsilos gemessene Länge der Breite der Verteilvorrichtung entspricht, mittels der Erntegutkontaktfläche seitlich verschoben wird. Damit geht ein Rangieren einher, das großen Aufwand erfordert.

Die DE 20 2013 006 247 U1 offenbart ein landwirtschaftliches Verteilgerät mit einer Rückwand 3 und davon unbeweglich abstehenden Zinken. Die DE 43 19 223 A1 offenbart einen Futterverteiler mit einer Verteilwalze mit von einem Schild unbeweglich abstehenden Zinken. Die XP093171666 offenbart eine bekannte Verteilvorrichtung für die Verteilung landwirtschaftlichen Erntegutes.

Aufgabe der vorliegenden Erfindung ist die Verbesserung der Verteilvorrichtung derart, dass sie die Verlagerung des Erntegutes quer zur Längsrichtung des Fahrsilos erleichtert.

Erfindungsgemäß wird die Aufgabe dadurch gelöst, dass die Zinkenelemente zur Förderung des Erntegutes quer zur Arbeitsrichtung relativ zum Schildelement drehbar um sich in die Arbeitsrichtung erstreckende Drehachsen gelagert sind.

Durch die Drehung der Zinkenelemente erhält das auf ihnen aufliegende Erntegut einen Bewegungsimpuls in ihre tangentiale Richtung und damit in einer Draufsicht eine zur Arbeitsrichtung rechtwinkelige Richtung, d. h. bei Zusammenfallen der Arbeitsrichtung und der Längsrichtung des Fahrsilos, zur Seite. Das Erntegut lässt sich also mit der erfindungsgemäßen Verteilvorrichtung mit nur einer Über- bzw. Durchfahrt des Fahrsilos in dessen Längsrichtung insgesamt seitlich verlagern, ohne dass dazu noch das aufwändige Rangieren notwendig ist.

Bei den Zinkenelementen handelt es sich insbesondere um vorzugsweise profilierte Zinken, die in die Arbeitsrichtung abstehen und bevorzugt in spitzen Enden auslaufen. Die Enden der Zinkenelemente sind insbesondere unverbunden ausgebildet. Durch diese Ausbildung lassen sich die Zinkenelemente in die Arbeitsrichtung in das Erntegut einstechen. Bevorzugt ist das Schildelemente die einzige mechanische Verbindung der Zinkenelemente. Die Zinkenelemente sind insbesondere gleich ausgebildet.

Das Schildelement ist insbesondere ein starrer Teil der Verteilvorrichtung, der zumindest einem Großteil der Zinkenelemente in die Arbeitsrichtung nachgelagert ist. Das Schildelement hat bevorzugt eine deutlich größere Erstreckung rechtwinklig zur Arbeitsrichtung und horizontal als in die Arbeitsrichtung. Das Schildelement schließt bevorzugt einen Verteilvorrichtungsrahmen ein, der zur Aufnahme sämtlicher von den Zinkenelementen übertragener Kräfte ausgebildet ist.

Die Erntegut-Kontaktfläche ist, zumindest zum Großteil, insbesondere um zumindest 60 °, bevorzugt um zumindest 70 °, besonders bevorzugt um zumindest 80 ° zur Arbeitsrichtung angewinkelt. Dadurch lässt sich das Erntegut besonders effektiv und unter Nutzung der Zinkenelemente in die Arbeitsrichtung schieben. Die Erntegutkontaktfläche ist bevorzugt zumindest im Wesentlichen rechteckig und/oder zumindest im Wesentlichen eben und/oder zumindest zwei Meter, insbesondere etwa drei Meter breit und/oder zumindest einen Meter hoch. Die Erntegut-Kontaktfläche hat zur Reduzierung des Gewichts des Schildelementes insbesondere Ausnehmungen und/oder ist als Rost ausgebildet, ohne dass im Betrieb ein erheblicher Teil typischen Erntegutes das Schildelement durchtreten kann.

Die Drehachsen der Zinkenelemente fallen bevorzugt mit den Längsmittelachsen der Zinkenelemente zusammen, die bevorzugt von den Achsen über ihre gesamte Länge im Querschnitt mittig geschnitten werden. Je nach konkreter Ausbildung der Zinkenelemente im Querschnitt handelt es sich bei den Längsmittelachsen um Symmetrieachsen. Die Zinkenelemente sind bevorzugt mittels einer Lagerung im/am Schildelement gelagert.

Besonders bevorzugt weist die Verteilvorrichtung eine Antriebseinrichtung auf, die zur Drehung der Zinkenelemente um die Drehachsen ausgebildet ist. Dadurch lässt sich die seitliche Verlagerung des Erntegutes einstellen. Besonders bevorzugt umfasst die Antriebseinrichtung einen Hydraulikmotor. Dadurch lässt sich eine beispielsweise vom Traktor bereitgestellte hydraulische Energie in mechanische Energie zur Drehung der Zinkenelemente übersetzen. Alternativ zum Hydraulikmotor umfasst die Antriebseinrichtung bevorzugt eine mechanisch mit den Zinkenelementen gekoppelte Gelenkwelle, die an einer Zapfwelle eines Traktors anzuordnen ist.

Vorzugsweise weist die Antriebseinrichtung ein Getriebe auf. Das Getriebe umfasst bevorzugt zumindest eine Kette und/oder zumindest einen Riemen zur Übertragung eine Antriebsenergie auf die Zinkenelemente. Insbesondere weist jedes Zinkenelement ein Zahnrad oder Ritzel bzw. eine Riemenscheibe auf, durch das sie die Antriebsenergie aufnehmen können. In einer ersten vorteilhaften Ausgestaltung der Erfindung überträgt die zumindest eine Kette und/oder der zumindest eine Riemen Antriebsenergie auf eine Mehrzahl von Zinkenelementen, insbesondere auf sämtliche Zinkenelemente. In einer zweiten vorteilhaften Ausgestaltung der Erfindung weist das Getriebe zumindest eine Kette und/oder zumindest einen Riemen pro Zinkenelement auf. Die Kette bzw. der Riemen erlauben eine zuverlässige und effiziente Antriebsenergieübertragung.

In einer vorteilhaften Ausgestaltung der Erfindung ist das Getriebe zumindest in einer Betriebskonfiguration zu einer Drehung unterschiedlicher der Zinkenelemente in unterschiedliche Drehrichtungen ausgebildet. Das bedeutet, dass das Getriebe einen Betrieb ermöglicht, bei dem bei einer Betrachtung der Verteilvorrichtung entgegen der Arbeitsrichtung ein Teil der Zinkenelemente mit dem Uhrzeigersinn und ein weiterer Teil der Zinkenelemente gegen den Uhrzeigersinn dreht. Dadurch lässt sich beispielsweise ein erster Teil des Erntegutes zur einen Seite der Verteilvorrichtung verlagern und ein weiterer Teil des Erntegutes zur anderen Seite der Verteilvorrichtung verlagern. Besonders bevorzugt ist die Drehrichtung zumindest eines der Zinkenelemente veränderlich und/oder lässt sich eine Drehung der Zinkenelemente selektiv ein- und ausschalten, um gewünschte Verlagerungen des Erntegutes exakt einstellen zu können.

Vorzugsweise liegen die Drehachsen der Zinkenelemente in einer Drehachsenebene. Dieser erstreckt sich im Betrieb bevorzugt zumindest im Wesentlichen parallel zum Boden. Zu der Drehachsenebene erstreckt sich eine erste Außenkante der Erntegutkontaktfläche vorzugsweise parallel. Bei der ersten Außenkante handelt es sich insbesondere um eine im Betrieb dem Erdboden zugewandte Außenkante, d.h. eine Unterkante. Von dieser haben die Drehachsen einen einheitlichen Abstand. Das führt im Betrieb dazu, dass die Zinkenelemente auf derselben Höhe in das Erntegut eintauchen und unter sich eine gleichmäßig hohe Schicht von Erntegut hinterlassen.

Bevorzugt ist die Länge der ersten Außenkante mindestens so groß wie der Abstand der Drehachsen der am Weitesten voneinander entfernten Zinkenelemente. Bevorzugt erstreckt sich die erste Außenkante in oder entgegen der Arbeitsrichtung betrachtet an sämtlichen Zinkenelementen entlang und steht beidseitig über die äußersten Zinkenelemente über. Durch diese Ausbildung der Erntegutkontaktfläche hält das Schildelement quer zur Arbeitsrichtung zu förderndes Erntegut im Betrieb effektiv in Kontakt auch mit den äußeren Zinkenelementen.

Der Abstand zwischen der ersten Außenkante und Drehachsenebene beträgt vorzugsweise weniger als die Hälfte, bevorzugt weniger als ein Viertel, besonders bevorzugt weniger als ein Zehntel eines Abstandes zwischen der ersten Außenkante und einer ihr gegenüberliegenden zweiten Außenkante der Erntegutkontaktfläche. Die zweite Außenkante ist insbesondere eine im Betrieb vom Boden abgewandte und insbesondere mittige Oberkante der Erntegutkontaktfläche. Gemäß dieser Ausbildung sind die Zinkenelemente im insbesondere äußersten unteren Bereich des Schildelementes gelagert. Dies ist insofern vorteilhaft, als die Zinkenelemente ihre Wirkung so auf den Großteil des unverdichtet abgelegten Erntegutes entfalten können.

Der Durchmesser der Zinkenelemente ist vorzugsweise kleiner als der Abstand benachbarter Drehachsen, insbesondere kleiner als die Hälfte des Abstandes der Drehachsen. Die Zinkenelemente greifen in einer Draufsicht auf die Drehachsenebene im Betreib somit nicht ineinander ein. Der Radius der Zinkenelemente ist bevorzugt geringer als der Abstand ihrer jeweiligen Drehachse von der ersten Außenkante, sodass bei einem Absetzen der Verteilvorrichtung auf einem zur Drehachsenebene parallelen Boden, bei dem die Arbeitsrichtung horizontal ist, nur das Schildelement den Boden kontaktiert.

Vorzugsweise weist die Verteilvorrichtung zumindest vier, bevorzugt zumindest sechs, besonders bevorzugt zumindest acht Zinkenelemente auf, deren Drehachsen insbesondere äquidistant zueinander angeordnet sind. Die Zinkenelemente stehen hierbei praktisch insbesondere quer zur Arbeitsrichtung aufgereiht in die Arbeitsrichtung vom Schildelement ab. Bei Ausbildung des Getriebes zur Drehung der Zinkenelemente in unterschiedliche Drehrichtungen ist das Getriebe insbesondere derart ausgebildet, dass die einerseits einer Längsmittelebene, die sich in die Arbeitsrichtung und rechtwinklig zur Drehachseneben erstreckt, angeordneten insbesondere vier Zinkenelemente in eine erste Richtung drehen und die andererseits der Längsmittelebene angeordneten insbesondere vier Zinkenelemente in eine der ersten Richtung entgegengesetzte zweite Richtung drehen.

In einer vorteilhaften Ausgestaltung der Erfindung hat zumindest eines der Zinkenelemente in einem zur Arbeitsrichtung rechtwinkligen Querschnitt einer Umfangskontur, deren Abstand von der sich in die Arbeitsrichtung erstreckenden Längsmittelachse des Zinkenelementes in Umfangsrichtung variiert. Das Zinkenelement hat also einen unrunden Querschnitt. Die Längsmittelachse schneidet das Zinkenelement insbesondere mittig und/oder entspricht der Drehachse des Zinkenelementes. Durch die beschriebene Umfangskontur wird eine bessere Förderwirkung mit dem Zinkenelement erreicht, indem dem auf dem Zinkenelement aufliegenden Erntegut im Betrieb Impulse in tangentialer Richtung versetzt werden.

Bevorzugt weist das zumindest eine Zinkenelement ein Zentralelement auf. Dieses erstreckt sich insbesondere über die gesamte Länge des Zinkenelementes und/oder ist aus einem im Querschnitt runden Material besonders bevorzugt ohne Hohlraum ausgebildet. Neben dem Zentralelement umfasst das Zinkenelement einer ersten bevorzugten Variante des Zinkenelementes ein vom Zentralelement abstehendes und sich flächig in einer Förderebene erstreckendes Förderelement. In der Förderebene liegt die Längsmittelachse des Zinkenelements. Im Querschnitt erstreckt sich das Förderelement bevorzugt radial nach außen. Vorzugsweise weist das Zinkenelement drei oder vier über den Umfang des Zentralelementes verteilte Förderelemente auf.

In einer zweiten bevorzugten Variante des Zinkenelementes umfasst es neben dem Zentralelement ein vom Zentralelement abstehendes und sich spiralförmig um das Zentralelement erstreckendes Spiralförderelement. Bevorzugt weist das Zinkenelement drei oder vier über den Umfang des Zentralelementes verteilte Spiralförderelemente auf. Durch das zumindest eines Spiralförderelement lässt sich das Erntegut nicht nur seitlich, sondern auch anteilig in oder entgegen der Arbeitsrichtung fördern und auflockern, wodurch die Verteilvorrichtung weitere Möglichkeiten zur optimalen Verteilung des Erntegutes bietet.

Eine vom Zentralelement abgewandte und in einem Längsschnitt sichtbare Längskontur des Förderelementes bzw. des Spiralförderelementes ist vorzugsweise sägezahnmäßig ausgebildet. Das bedeutet, dass die Längskontur sich insbesondere in einem Längsschnitt durch das Zinkenelement aus Linien mit in Bezug auf die Längsmittelachse unterschiedlicher Steigung zusammensetzt. Insbesondere ist die Sägezahnform derart, dass die Sägezähne eine Art Widerhaken entgegen einer Bewegung des Zinkenelementes entgegen der Arbeitsrichtung aus dem Erntegut bilden. Eine gedachte Hüllfläche um das Förderelement oder das Spiralförderelement hat insbesondere einen Durchmesser, der in die Arbeitsrichtung abnimmt. Dadurch lässt sich eine optimale Förderwirkung sicherstellen. Das zumindest eine Spiralförderelement bzw. Förderelement ist insbesondere ortsfest relativ zum Zentralelement, insbesondere damit verschweißt.

Bevorzugt sind die Zinkenelemente zumindest mittels zwei Kegelrollenlager an Schildelement gelagert. Die beiden Kegelrollenlager sind dabei besonders bevorzugt in X- oder O-Anordnung angeordnet. Die Kegelrollenlager sind vorzugsweise am zu den Spitzen der Zinkenelemente gewandten Ende und/oder in Arbeitsrichtung hinter der Erntegutkontaktfläche des Schildelementes daran angeordnet. Entgegen der Arbeitsrichtung versetzt zu dem Kegelrollenlager ist insbesondere ein zusätzliches Kugellager zur Lagerung der Zinkenelemente an Schildelement angeordnet. Hierdurch ist eine robuste Lagerung geschaffen, die den Anforderungen in der Landwirtschaft standhält.

In einer bevorzugten Ausgestaltungsform der Erfindung weist die Verteilvorrichtung zumindest ein Ausklappschildelement auf. Bevorzugt weist die Verteilvorrichtung beidseitig jeweils ein Ausklappschildelement auf. Das zumindest eine Ausklappschildelement ist aus einer Transportstellung in eine Arbeitsstellung beweglich, insbesondere schwenkbar, am Schildelement und/oder am Verteilvorrichtungsrahmen gelagert. Im Falle einer schwenkbaren Lagerung verläuft die Schwenkachse insbesondere in die Arbeitsrichtung. Das Ausklappschildelement weist eine zumindest in der Arbeitsstellung zur Arbeitsrichtung angewinkelte Ausklapperntegutkontaktfläche zum Schieben des Erntegutes in die Arbeitsrichtung auf. Vom Ausklappschildelement steht zumindest ein Ausklappzinkenelement ab, das zur Förderung des Erntegutes quer zur Arbeitsrichtung relativ zum Ausklappschildelement drehbar um eine sich zumindest in der Arbeitsstellung in die Arbeitsrichtung erstreckende Drehachse gelagert ist. Das Ausklappzinkenelement wird insbesondere wie die Zinkenelemente von der Antriebseinrichtung angetrieben. In der Arbeitsstellung ist die Drehachse des Ausklappzinkenelementes insbesondere in der Drehachseneben angeordnet. Durch das zumindest eine Ausklappschildelement lässt sich eine größere Arbeitsbreite, insbesondere von mehr als drei Meter, der Verteilvorrichtung erreichen. Durch die Bewegung aus der Arbeitsstellung in die Transportstellung wird trotzdem sichergestellt, dass die Verteilvorrichtung über öffentliche Straßen transportabel ist.

Vorzugsweise weist die Verteilvorrichtung eine Aufnahmeeinrichtung auf, die zu einer Anordnung bzw. Kopplung der Verteilvorrichtung an einem Frontlader und/oder Dreipunkt-Front- und/oder- Heckkraftheber ausgebildet ist. Die Aufnahmeeinrichtung ist insbesondere ortsfest zum Schildelement und/oder an der von den Zinkenelementen abgewandten Seite des Schildelementes angeordnet. Durch die Aufnahmeeinrichtung ist die Verteilvorrichtung auf einfache Weise mit den gängigen Traktoren zu koppeln und ist die Arbeitshöhe der Verteilvorrichtung in Betrieb bequem einstellbar.

Bevorzugt weist die Verteilvorrichtung zumindest ein vom Schildelement abstehendes und relativ zum Schildelement ortsfestes Starrzinkenelement auf, das sich länglich und insbesondere beabstandet von der Drehachsenebene in die Arbeitsrichtung erstreckt. Besonders bevorzugt weist die Verteilvorrichtung sowohl links als auch rechts eine Mehrzahl von Starrzinkenelementen auf, die sich jeweils in einer Starrzinkenebene erstrecken, die sich in die Arbeitsrichtung erstreckt und rechtwinklig zur Drehachsenebene angeordnet ist.

Weitere Einzelheiten und Vorteile der Erfindung sind den nachfolgend beschriebenen, schematisch dargestellten Figuren zu entnehmen; es zeigen:
- Fig. 1: eine perspektivische Darstellung einer erfindungsgemäßen Verteilvorrichtung mit einem ersten Ausführungsbeispiel von Zinkenelementen in einer perspektivischen Darstellung,
- Fig. 2: eine Frontansicht der Verteilvorrichtung gemäß Fig. 1 mit schematischer Darstellung der Zinkenelemente,
- Fig. 3: eine weitere perspektivische Darstellung der Verteilvorrichtung gemäß Fig. 1,
- Fig. 4: eine Draufsicht der Verteilvorrichtung gemäß Fig. 1,
- Fig. 5: einen Längsschnitt der Verteilvorrichtung gemäß Fig. 1 entlang der Schnittlinie V in Fig. 4,
- Fig. 6: eine Detaildarstellung des Längsschnittes gemäß Fig. 5,
- Fig. 7: eine perspektivische Darstellung des ersten Ausführungsbeispiels des Zinkenelementes,
- Fig. 8: eine Frontansicht des Zinkenelementes gemäß Fig. 7,
- Fig. 9: eine perspektivische Darstellung eines zweiten Ausführungsbeispiels des Zinkenelementes,
- Fig. 10: eine Frontansicht des Zinkenelementes gemäß Fig. 9,
- Fig. 11: eine perspektivische Darstellung eines dritten Ausführungsbeispiels des Zinkenelementes,
- Fig. 12: eine Frontansicht des Zinkenelementes gemäß Fig. 11.

Die nachfolgend erläuterten Merkmale können auch einzeln oder in anderen Kombinationen als dargestellt oder beschrieben Gegenstand der Erfindung sein, stets aber zumindest in Kombination mit den Merkmalen des Anspruchs 1. Sofern sinnvoll, sind funktional gleichwirkende Teile mit identischen Bezugsziffern versehen.

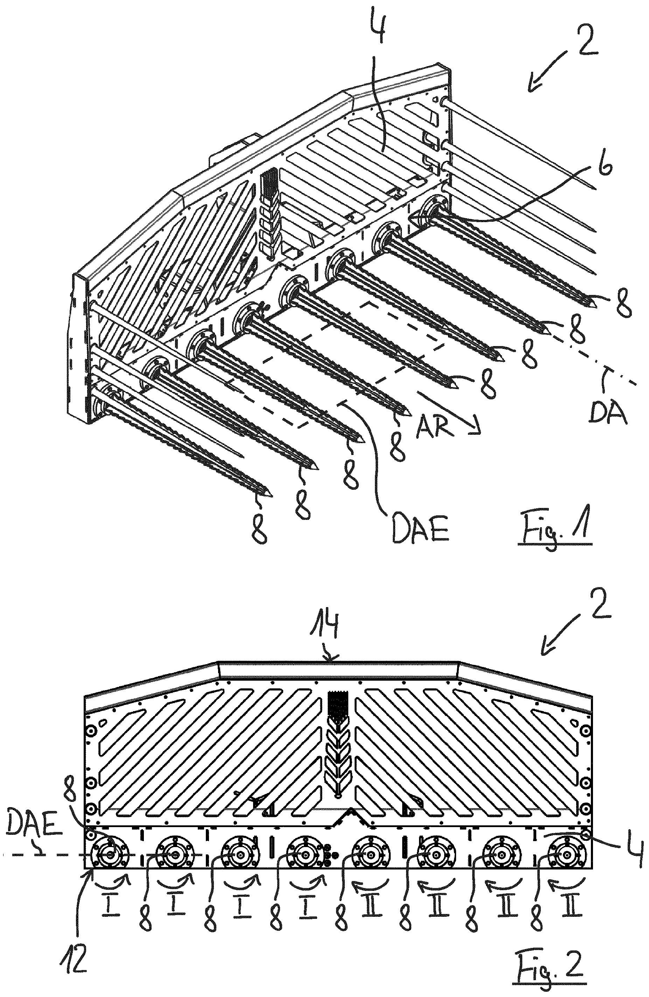

Die Figuren 1 bis 6 zeigen eine erfindungsgemäße Verteilvorrichtung 2 für die Verteilung des nicht dargestellten landwirtschaftlichen Erntegutes. Die Verteilvorrichtung 2 weist ein Schildelement 4 und acht daran angeordnete Zinkenelemente 8 auf. Das Schildelement 4 weist eine zu einer Arbeitsrichtung AR angewinkelte und den Zinkenelementen 8 zugewandte Erntegutkontaktfläche 6 zum Schieben des Erntegutes in die Arbeitsrichtung AR auf.

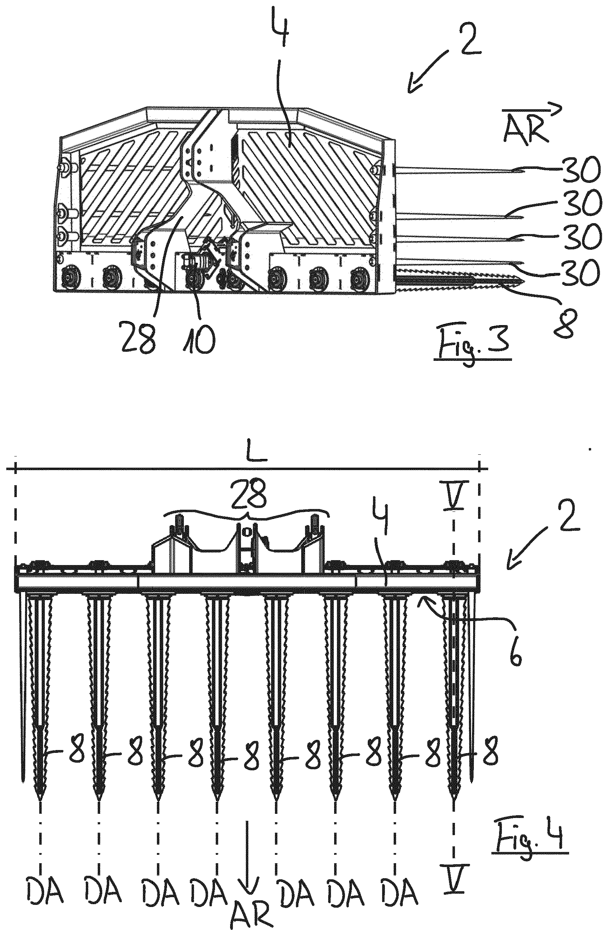

Die Zinkenelemente 8 stehen vom Schildelement 4 länglich in die Arbeitsrichtung AR ab und erstrecken sich parallel zueinander. Die Zinkenelemente 8 sind zur Förderung des Erntegutes quer zur Arbeitsrichtung AR relativ zum Schildelement 4 drehbar um sich in Arbeitsrichtung AR erstreckende Drehachsen DA gelagert (sh. Fig. 1 und 4).

Zur Drehung der Zinkenelemente 8 weist die Verteilvorrichtung 2 eine Antriebseinrichtung mit einem nicht dargestellten Getriebe auf. Die Antriebseinrichtung ist zur Drehung der Zinkenelemente 8 um die Drehachsen DA ausgebildet. Dazu weist die Antriebseinrichtung einen Hydraulikmotor 10 (sh. Fig. 3) auf, der mit den Zinkenelementen 8 mit zumindest einer nicht dargestellten Kette verbunden ist. Das Getriebe ist derart ausgebildet, dass es zumindest in einer Betriebskonfiguration zu einer Drehung der Zinkenelemente 8 in unterschiedliche Drehrichtungen I, II ausgebildet ist. Konkret werden die in Arbeitsrichtung AR rechten vier Zinkenelemente 8 in eine erste Drehrichtung I und die in Arbeitsrichtung AR linken vier Zinkenelemente 8 in eine zweite Drehrichtung II gedreht, um das Erntegut im Betrieb beidseitig der Verteilvorrichtung 2 gleichmäßig abzulegen.

Die Drehachsen DA liegen in einer Drehachsenebene DAE (sh. Fig. 1 und 2) zu der sich eine erste Außenkante 12 der Erntegutkontaktfläche 6 (sh. Fig. 2) parallel erstreckt. Eine Länge L der ersten Außenkante 12 ist größer als der Abstand der äußeren Drehachsen DA voneinander (sh. Fig. 4). Der Abstand zwischen der ersten Außenkante 12 und der Drehachsenebene DAE beträgt weniger als ein Zehntel des Abstandes zwischen der ersten Außenkante 12 und einer ihr gegenüberliegenden zweiten Außenkante 14 der Erntegutkontaktfläche 6. Die Drehachsen DA sind dabei äquidistant zueinander angeordnet.

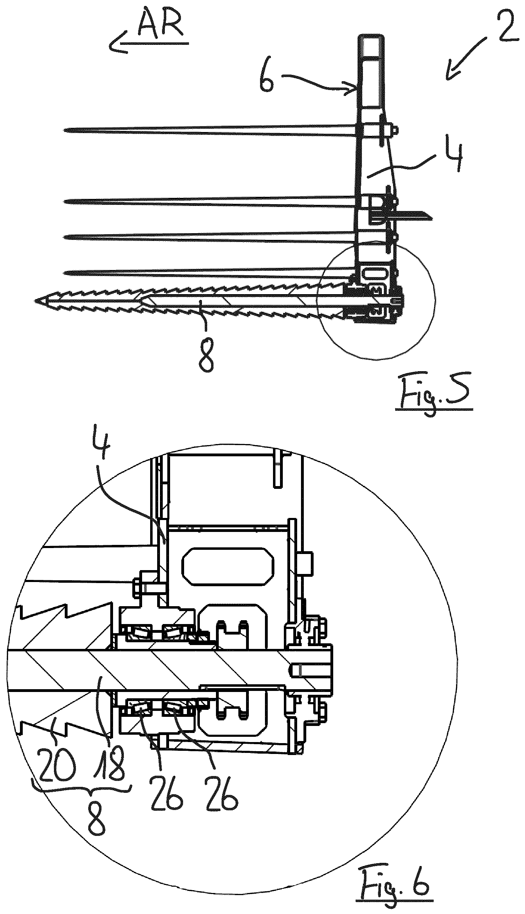

Die Zinkenelemente 8 sind mittels zweier in O-Anordnung angeordneter Kegelrollenlager 26 am Schildelement 4 gelagert (sh. Fig. 6). Entgegen der Arbeitsrichtung AR versetzt zu den Kegelrollenlager 26 ist bevorzugt eine Riemenscheibe bzw. ein Ritzel und/oder ein nicht dargestelltes Rillenkugellager angeordnet. Die Verteilvorrichtung 2 weist eine zum Schildelement 4 ortsfeste Aufnahmeeinrichtung 28 auf (sh. Fig. 3 und 4), die zu einer Anordnung der Verteilvorrichtung 2 an einem DreipunktKraftheber eines nicht dargestellten Traktors dient. Außerdem weist die Verteilvorrichtung 2 oberhalb der äußeren Zinkenelemente 8 jeweils 4 relativ zum Schildelement 4 unbewegliche Starrzinkenelemente 30 auf, die sich länglich und beabstandet von der Drehachsenebene DAE in die Arbeitsrichtung AR erstrecken.

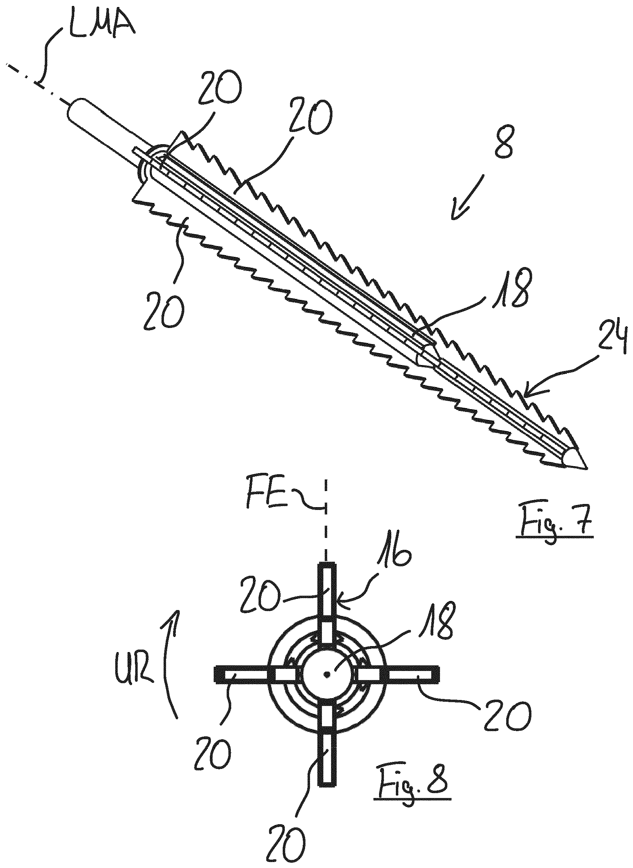

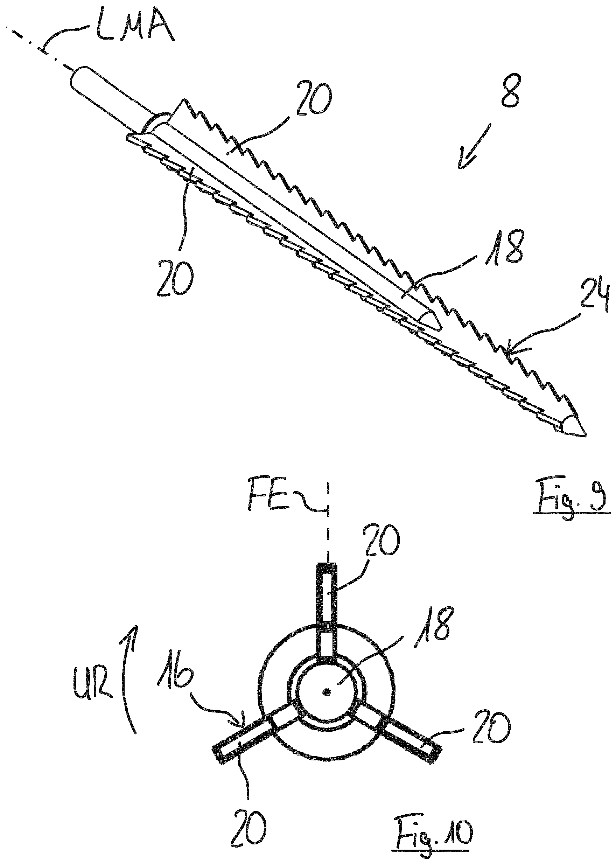

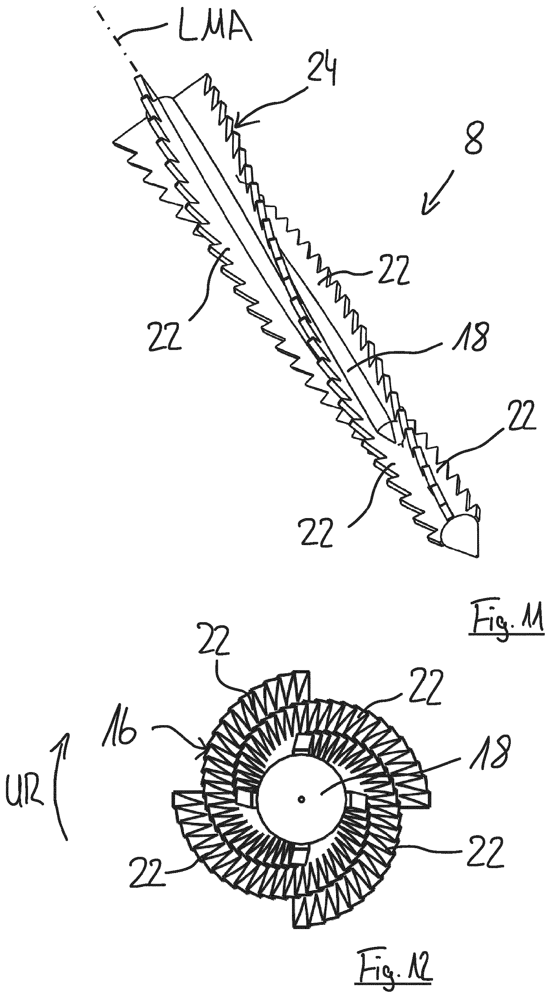

Jedes der drei gezeigten Ausführungsbeispiele des Zinkenelementes 8 hat in seiner Draufsicht eine Umfangskontur 16, deren Abstand von einer sich in die Arbeitsrichtung AR erstreckende Längsmittelachse LMA des Zinkenelementes 8, die ihrer Drehachse DA entspricht, in einer Umfangsrichtung UR variiert (sh. Fig. 8, 10 und 12). Sämtliche der im Detail dargestellten Zinkenelemente 8 weisen ein Zentralelement 18 auf. Die Ausführungsbeispiele gemäß den Fig. 7 bis 10 weisen jeweils mehrere vom Zentralelement 18 abstehende und sich flächig in eine Förderebene FE erstreckende Förderelemente 20 auf, wobei die Längsmittelachse LMA des jeweilige Zinkenelementes 8 in der Förderebene FE liegt. Das Ausführungsbeispiel gemäß den Fig. 11 und 12 weist vier vom Zentralelement 18 abstehende Spiralförderelemente 22 auf, die sich spiralförmig um das Zentralelement 18 erstrecken. Die vom Zentralelement abgewandten Längskonturen 24 der Förderelemente 20 bzw. der Spiralförderelemente 22 sind sägezahnförmig ausgebildet.

## Patentansprüche

1. Verteilvorrichtung (2) für die Verteilung landwirtschaftlichen Erntegutes, aufweisend ein Schildelement (4) mit einer zu einer Arbeitsrichtung (AR) angewinkelten Erntegutkontaktfläche (6) zum Schieben des Erntegutes in die Arbeitsrichtung (AR) und eine Mehrzahl von vom Schildelement (4) abstehenden Zinkenelementen (8), die sich parallel zueinander länglich in die Arbeitsrichtung (AR) erstrecken, **dadurch gekennzeichnet, dass** die Zinkenelemente (8) zur Förderung des Erntegutes quer zur Arbeitsrichtung (AR) relativ zum Schildelement (4) drehbar um sich in die Arbeitsrichtung (AR) erstreckende Drehachsen (DA) gelagert sind.

2. Verteilvorrichtung nach Anspruch 1, **gekennzeichnet durch** eine ein Getriebe aufweisende Antriebseinrichtung, die zur Drehung der Zinkenelemente (8) ausgebildet ist und insbesondere einen Hydraulikmotor (10) aufweist.

3. Verteilvorrichtung nach Anspruch 2, **dadurch gekennzeichnet, dass** das Getriebe zumindest eine Kette und/oder zumindest einen Riemen zur Übertragung einer Antriebsenergie auf die Zinkenelemente (8) aufweist.

4. Verteilvorrichtung nach Anspruch 2 oder 3, **dadurch gekennzeichnet, dass** das Getriebe zumindest in einer Betriebskonfiguration zu einer Drehung unterschiedlicher Zinkenelemente (8) in unterschiedliche Drehrichtungen (I, II) ausgebildet ist.

5. Verteilvorrichtung nach einem der vorhergehenden Ansprüche, **dadurch gekennzeichnet, dass** die Drehachsen (DA) in einer Drehachsenebene (DAE) liegen, zu der sich eine erste Außenkante (12) der Erntegutkontaktfläche (6) parallel erstreckt.

6. Verteilvorrichtung nach Anspruch 5, **dadurch gekennzeichnet, dass** die Länge (L) der ersten Außenkante (12) mindestens so groß ist wie ein Abstand der Drehachsen (DA) der am weitesten voneinander entfernten Zinkenelemente (8).

7. Verteilvorrichtung nach Anspruch 5 oder 6, **dadurch gekennzeichnet, dass** ein Abstand zwischen der ersten Außenkante (12) und der Drehachsenebene (DAE) weniger als die Hälfte, bevorzugt weniger als ein Viertel, besonders bevorzugt weniger als ein Zehntel eines Abstandes zwischen der ersten Außenkante (12) und einer ihr gegenüberliegenden zweiten Außenkante (14) der Erntegutkontaktfläche (6) beträgt.

8. Verteilvorrichtung nach einem der vorhergehenden Ansprüche, **gekennzeichnet durch** zumindest vier, bevorzugt zumindest sechs, besonders bevorzugt zumindest acht Zinkenelemente (8), deren Drehachsen (DA) insbesondere äquidistant zueinander angeordnet sind.

9. Verteilvorrichtung nach einem der vorhergehenden Ansprüche, **dadurch gekennzeichnet, dass** zumindest eines der Zinkenelemente (8) in einem zur Arbeitsrichtung (AR) rechtwinkligen Querschnitt eine Umfangskontur (16) hat, deren Abstand von einer sich in die Arbeitsrichtung (AR) erstreckenden Längsmittelachse (LMA) des Zinkenelementes (8) in Umfangsrichtung (UR) variiert.

10. Verteilvorrichtung nach Anspruch 9, **dadurch gekennzeichnet, dass** das zumindest eine Zinkenelement (8) ein Zentralelement (18) und zumindest ein vom Zentralelement (18) abstehendes und sich flächig in einer Förderebene (FE), in der die Längsmittelachse (LMA) des Zinkenelementes (8) liegt, erstreckendes Förderelement (20) aufweist.

11. Verteilvorrichtung nach Anspruch 9, **dadurch gekennzeichnet, dass** das zumindest eine Zinkenelement (8) ein Zentralelement (18) und zumindest ein vom Zentralelement (18) abstehendes und sich spiralförmig um das Zentralelement (18) erstreckendes Spiralförderelement (22) aufweist.

12. Verteilvorrichtung nach Anspruch 10 oder 11, **dadurch gekennzeichnet, dass** eine vom Zentralelement (18) abgewandte Längskontur (24) des Förderelementes (20) bzw. des Spiralförderelementes (22) sägezahnförmig ausgebildet ist.

13. Verteilvorrichtung nach einem der vorhergehenden Ansprüche, **dadurch gekennzeichnet, dass** die Zinkenelemente (8) zumindest mit zwei Kegelrollenlagern (26) in X-Anordnung oder O-Anordnung am Schildelement (4) gelagert sind.

14. Verteilvorrichtung nach einem der vorhergehenden Ansprüche, **gekennzeichnet durch** zumindest ein Ausklappschildelement, das aus einer Transportstellung in eine Arbeitsstellung bewegbar, insbesondere schwenkbar, am Schildelement (4) gelagert ist und eine zumindest in der Arbeitsstellung zur Arbeitsrichtung (AR) angewinkelte Ausklapperntegutkontaktfläche zum Schieben des Erntegutes in die Arbeitsrichtung (AR) aufweist, wobei vom Ausklappschildelement zumindest ein Ausklappzinkenelement absteht, das zur Förderung des Erntegutes quer zur Arbeitsrichtung (AR) relativ zum Ausklappschildelement drehbar um sich zumindest in der Arbeitsstellung in die Arbeitsrichtung (AR) erstreckende Drehachse gelagert ist.

15. Verteilvorrichtung nach einem der vorhergehenden Ansprüche, **gekennzeichnet durch** eine zum Schildelement (4) insbesondere ortsfeste Aufnahmeeinrichtung (28), die zu einer Anordnung der Verteilvorrichtung (2) an einem Frontlader und/oder einem Dreipunkt-Front- und/oder -Heckkraftheber ausgebildet ist.

## Claims

1. Distribution device (2) for the distribution of agricultural harvested material, having a shield element (4) with a harvested material contact surface (6) angled relative to a working direction (AR) for pushing the harvested material in the working direction (AR) and a multiplicity of prong elements (8) projecting from the shield element (4) and extending longitudinally parallel to one another in the working direction (AR), **characterized in that** the prong elements (8) are mounted rotatably about axes of rotation (DA) extending in the working direction (AR) relative to the shield element (4) for conveying the harvested material transversely to the working direction (AR).

2. Distribution device according to Claim 1, **characterized by** a drive apparatus having a transmission, which drive apparatus is formed to rotate the prong elements (8) and in particular has a hydraulic motor (10).

3. Distribution device according to Claim 2, **characterized in that** the transmission has at least one chain and/or at least one belt for transmitting drive energy to the prong elements (8).

4. Distribution device according to Claim 2 or 3, **characterized in that** the transmission is formed, at least in one operating configuration, for a rotation of different prong elements (8) in different directions of rotation (I, II).

5. Distribution device according to any one of the preceding claims, **characterized in that** the axes of rotation (DA) lie in a plane of the axis of rotation (DAE) to which a first outer edge (12) of the harvested material contact surface (6) extends parallel.

6. Distribution device according to Claim 5, **characterized in that** the length (L) of the first outer edge (12) is at least as large as a distance between the axes of rotation (DA) of the prong elements (8) which are furthest apart from one another.

7. Distribution device according to Claim 5 or 6, **characterized in that** a distance between the first outer edge (12) and the plane of the axis of rotation (DAE) is less than half, preferably less than a quarter, particularly preferably less than a tenth of a distance between the first outer edge (12) and a second outer edge (14) of the harvested material contact surface (6) opposite it.

8. Distribution device according to any one of the preceding claims, **characterized by** at least four, preferably at least six, particularly preferably at least eight prong elements (8), whose axes of rotation (DA) are arranged in particular equidistant from one another.

9. Distribution device according to any one of the preceding claims, **characterized in that** at least one of the prong elements (8) has a circumferential contour (16) in a cross-section at a right angle to the working direction (AR), the distance of which from a longitudinal centre axis (LMA) of the prong element (8) extending in the working direction (AR) varies in the circumferential direction (UR).

10. Distribution device according to Claim 9, **characterized in that** the at least one prong element (8) has a central element (18) and at least one conveying element (20) projecting from the central element (18) and extending in a flat manner in a conveying plane (FE) in which the longitudinal centre axis (LMA) of the prong element (8) lies.

11. Distribution device according to Claim 9, **characterized in that** the at least one prong element (8) has a central element (18) and at least one spiral conveying element (22) projecting from the central element (18) and extending spirally around the central element (18).

12. Distribution device according to Claim 10 or 11, **characterized in that** a longitudinal contour (24) of the conveying element (20) or of the spiral conveying element (22) facing away from the central element (18) is formed in a sawtooth-shaped manner.

13. Distribution device according to any one of the preceding claims, **characterized in that** the prong elements (8) are mounted on the shield element (4) at least with two tapered roller bearings (26) in an X arrangement or an O arrangement.

14. Distribution device according to any one of the preceding claims, **characterized by** at least one fold-out shield element, which is mounted on the shield element (4) so as to be movable, in particular pivotable, from a transport position into a working position and has a fold-out harvested material contact surface which is angled at least in the working position to the working direction (AR) for pushing the harvested material in the working direction (AR), wherein at least one fold-out prong element protrudes from the fold-out shield element, which is mounted so as to be rotatable about a axis of rotation which extends at least in the working position in the working direction (AR) for conveying the harvested material transversely to the working direction (AR) relative to the fold-out shield element.

15. Distribution device according to any one of the preceding claims, **characterized by** a receiving apparatus (28) which is in particular stationary with respect to the shield element (4) and which is formed for arranging the distribution device (2) on a front loader and/or a three-point front and/or rear power lift.

## Revendications

1. Dispositif de répartition (2) pour la répartition de produit récolté agricole, présentant un élément de bouclier (4) avec une surface de contact avec le produit récolté (6) inclinée par rapport à une direction de travail (AR) pour pousser le produit récolté dans la direction de travail (AR) et une pluralité d'éléments de dents (8) faisant saillie de l'élément de bouclier (4), qui s'étendent parallèlement les uns aux autres longitudinalement dans la direction de travail (AR), **caractérisé en ce que** les éléments de dents (8) sont montés de manière à pouvoir tourner autour d'axes de rotation (DA) s'étendant dans la direction de travail (AR) pour transporter le produit récolté transversalement à la direction de travail (AR) par rapport à l'élément de bouclier (4).

2. Dispositif de répartition selon la revendication 1, **caractérisé par** un appareil d'entraînement présentant une transmission, qui est réalisé pour faire tourner les éléments de dents (8) et qui présente notamment un moteur hydraulique (10).

3. Dispositif de répartition selon la revendication 2, **caractérisé en ce que** la transmission présente au moins une chaîne et/ou au moins une courroie pour transmettre une énergie d'entraînement aux éléments de dents (8).

4. Dispositif de répartition selon la revendication 2 ou 3, **caractérisé en ce que** la transmission est réalisée, au moins dans une configuration de fonctionnement, pour faire tourner différents éléments de dents (8) dans différentes directions de rotation (I, II).

5. Dispositif de répartition selon l'une quelconque des revendications précédentes, **caractérisé en ce que** les axes de rotation (DA) sont situés dans un plan d'axes de rotation (DAE) parallèlement auquel s'étend un premier bord extérieur (12) de la surface de contact avec le produit récolté (6).

6. Dispositif de répartition selon la revendication 5, **caractérisé en ce que** la longueur (L) du premier bord extérieur (12) est au moins aussi grande qu'une distance entre les axes de rotation (DA) des éléments de dents (8) les plus éloignés les uns des autres.

7. Dispositif de répartition selon la revendication 5 ou 6, **caractérisé en ce qu'**une distance entre le premier bord extérieur (12) et le plan d'axes de rotation (DAE) est inférieure à la moitié, de préférence inférieure à un quart, de manière particulièrement préférée inférieure à un dixième d'une distance entre le premier bord extérieur (12) et un deuxième bord extérieur (14) de la surface de contact avec le produit récolté (6) qui lui est opposé.

8. Dispositif de répartition selon l'une quelconque des revendications précédentes, **caractérisé par** au moins quatre, de préférence au moins six, de manière particulièrement préférée au moins huit éléments de dents (8), dont les axes de rotation (DA) sont notamment agencés équidistants les uns des autres.

9. Dispositif de répartition selon l'une quelconque des revendications précédentes, **caractérisé en ce qu'**au moins l'un des éléments de dents (8) a, dans une section transversale perpendiculaire à la direction de travail (AR), un contour périphérique (16) dont la distance par rapport à un axe médian longitudinal (LMA) de l'élément de dent (8), qui s'étend dans la direction de travail (AR), varie dans la direction périphérique (UR).

10. Dispositif de répartition selon la revendication 9, **caractérisé en ce que** l'au moins un élément de dent (8) présente un élément central (18) et au moins un élément de transport (20) faisant saillie de l'élément central (18) et s'étendant à plat dans un plan de transport (FE) dans lequel se situe l'axe médian longitudinal (LMA) de l'élément de dent (8).

11. Dispositif de répartition selon la revendication 9, **caractérisé en ce que** l'au moins un élément de dent (8) présente un élément central (18) et au moins un élément de transport en spirale (22) faisant saillie de l'élément central (18) et s'étendant en spirale autour de l'élément central (18).

12. Dispositif de répartition selon la revendication 10 ou 11, **caractérisé en ce qu'**un contour longitudinal (24) de l'élément de transport (20) ou de l'élément de transport en spirale (22), détourné de l'élément central (18), est réalisé en dents de scie.

13. Dispositif de répartition selon l'une quelconque des revendications précédentes, **caractérisé en ce que** les éléments de dents (8) sont montés sur l'élément de bouclier (4) avec au moins deux roulements à rouleaux coniques (26) selon un agencement en X ou selon un agencement en O.

14. Dispositif de répartition selon l'une quelconque des revendications précédentes, **caractérisé par** au moins un élément de bouclier déployable qui est monté sur l'élément de bouclier (4) de manière à pouvoir être déplacé, notamment de manière à pouvoir être pivoté, d'une position de transport dans une position de travail et qui présente une surface de contact avec le produit récolté déployable inclinée par rapport à la direction de travail (AR) au moins dans la position de travail pour pousser le produit récolté dans la direction de travail (AR), au moins un élément de dent déployable faisant saillie de l'élément de bouclier déployable, qui est monté de manière à pouvoir tourner par rapport à l'élément de bouclier déployable autour d'un axe de rotation s'étendant dans la direction de travail (AR) au moins dans la position de travail, pour transporter le produit récolté transversalement à la direction de travail (AR).

15. Dispositif de répartition selon l'une quelconque des revendications précédentes, **caractérisé par** un appareil de réception (28), notamment fixe par rapport à l'élément de bouclier (4), qui est réalisé pour un agencement du dispositif de répartition (2) sur un chargeur frontal et/ou un relevage avant et/ou arrière à trois points.
